# EUROPEAN PATENT APPLICATION

(11) **EP 0 811 849 A1**
(43) Date of publication of application: **10.12.1997**
(21) Application number: 96307393.7
(22) Date of filing: 10.10.1996
(51) Int. Cl.: G01P 3/68

(54) **Portable speed measuring toy**

(30) Priority: 05.06.1996 JP 143303/96
(71) Applicant: HUDSON SOFT CO., LTD., Sapporo-shi, Hokkaido 062 (JP)
(72) Inventor: Togashi, Shoichi, c/o Hudson Soft Co., Ltd., Shinjyuku-ku, Tokyo (JP)
(74) Representative: Haley, Stephen

(57) **Abstract**

In a speed measuring toy (10) which comprises a gate (11) comprising a couple of legs (11a, 11b) and a coupler portion (11c) which couples the legs, the gate has a passing opening (16) through which a moving member (17) passes. A detecting device (12) comprises first and second detectors (12A, 12B) which are positioned with a predetermined distance between the first and second detectors in a direction of movement of the moving member. A computing unit (13) computes a speed datum in response to first and second detecting signals from the first and second detectors. LCD (14) displays the speed datum from the computing unit.

## Description

The invention relates to a speed measuring toy, and more particularly, to a speed measuring toy which measures a sped datum of a moving member such as a toy of car or a glass bead.

A conventional speed measuring unit comprises first and second infrared ray photoelectric tubes which are positioned along a road with a predetermined distance of, for instance, 7 m between the first and second infrared ray photoelectric tubes. When an auto car moves on the road, the auto car interrupts first and second infrared rays form the first and second infrared ray photoelectric tubes, respectively. The conventional speed measuring unit measures a time period from the interruption of the first infrared ray to that of the second infrared ray to measure a speed of the auto car.

However, since it needs technical knowledges to manipulate the conventional speed measuring unit, and it is hard to miniaturize the conventional speed measuring unit, the conventional speed measuring unit can not be used as a speed measuring toy which measures a speed of a toy such as a toy of car, a glass bead, or a toy of bullet inside a house such as a nursery.

Recently, children have high intellectual appetites and want to obtain a measuring speed of the toy that is highly precise. Also, a speed measuring toy is wanted to be handy to move and carry for children.

Accordingly, it is an object of the invention to provide a speed measuring toy which is handy to move and carry and measures a speed datum that is highly precise.

Other objects of the invention will be become clear as the description proceeds.

According to the invention, there is provided a speed measuring toy, comprising:
a gate comprising a couple of legs and a coupler portion which couples the legs, the gate having a passing opening through which a moving member passes;
detecting means attached to the gate for detecting the moving member to produce a detecting signal;
computing means attached to the gate and connected to the detecting means for computing a speed datum in response to the detecting signal from the detecting means; and
displaying means attached to the gate and connected to the computing means for displaying the speed datum from the computing means.

The invention will be explained in more detail in conjunction with appended drawings, wherein:
FIG. 1 is a perspective view of a conventional speed measuring unit;
FIG. 2 is a perspective view of a speed measuring toy according to an embodiment of the invention;
FIG. 3 is a plan view of an LCD of the speed measuring toy illustrated in FIG. 2;
FIG. 4 is a sectional front view of the speed measuring toy illustrated in FIG. 2;
FIG. 5 is a blok diagram of a computing unit of the speed measuring toy illustrated in FIG. 2;
FIG. 6 is a plan view of one of displaying modes of the LCD illustrated in FIG. 3;
FIG. 7 is a plan view of a displaying mode of the LCD illustrated in FIG. 3;
FIG. 8 is a plan view of yet another displaying mode of the LCD illustrated in FIG. 3;
FIG. 9 is a flow chart for use in describing operation of the computing unit of the speed measuring toy illustrated in FIG. 2;
FIG. 10 is another flow chart for use in describing operation of the computing unit of the speed measuring toy illustrated in FIG. 2; and
FIG. 11 is a further flow chart for use in describing operation of the computing unit of the speed measuring toy illustrated in FIG. 2.

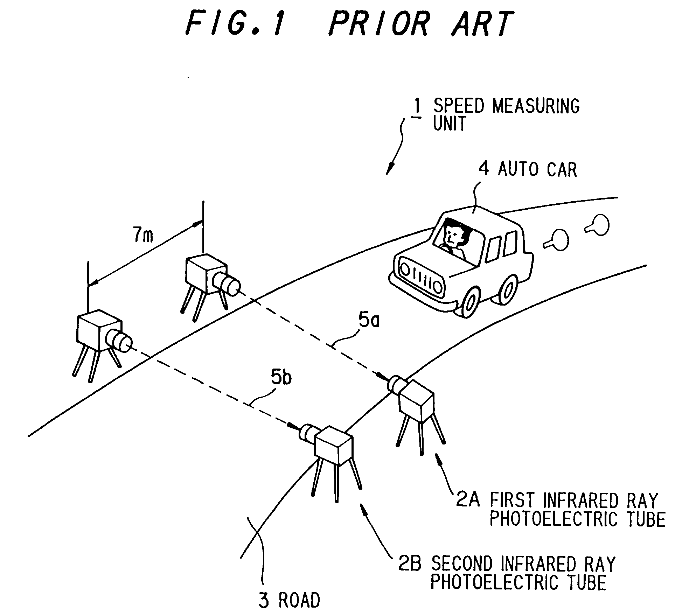

Before explaining a speed measuring toy in the preferred embodiment according to the invention, the aforementioned conventional speed measuring unit will be explained in FIG. 1.

In FIG. 1, the conventional speed measuring unit 1 comprises first and second infrared ray photoelectric tubes 2A and 2B which are positioned along a road 3 with an interval between the first and second infrared ray photoelectric tubes 2A and 2B in a running of an auto car 4. The interval between the first and second infrared ray photoelectric tubes 2A and 2B is, for instance, 7 m. When the auto car 4 runs on the road 3, the auto car 4 interrupts first and second infrared rays 5a and 5b of the first and second infrared ray photoelectric tubes 2A and 2B, respectively. The conventional speed measuring unit 1 measures a time period from the interruption of the first infrared ray 5a to that of the second infrared ray 5b to measure a speed of the auto car 4.

However, since it needs technical knowledges to manipulate the conventional speed measuring unit 1, and it is hard to miniaturize the conventional speed measuring unit 1, the conventional speed measuring unit 1 can not be used as a speed measuring toy which measures a speed of a toy such as a toy of car, a glass bead, or a toy of bullet inside a house such as a nursery.

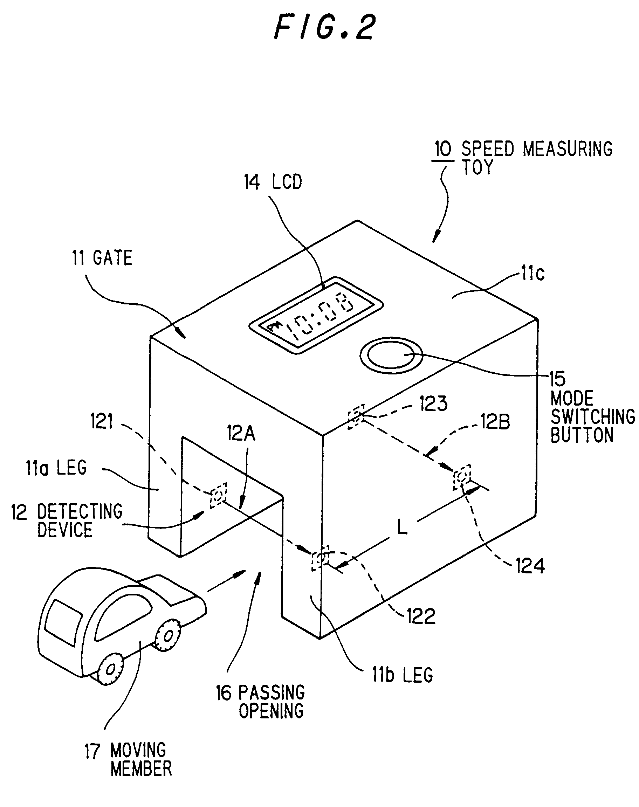

Referring to FIGS. 2 to 11, the description will proceed to a speed measuring toy according to an embodiment of the invention.

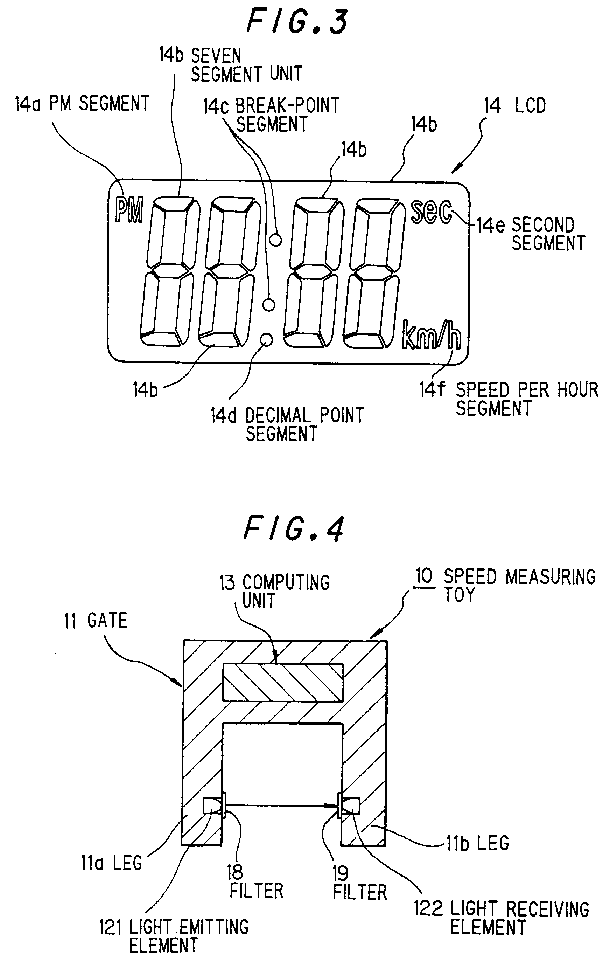

In FIGS. 2 and 4, the speed measuring toy 10 comprises a gate 11, a detecting device 12, a computing unit 13, a liquid crystal display (LCD) 14, and a mode switching button 15.

The gate 11 comprises a couple of legs 11a and 11b and a coupler portion 11c which couples upper portions of the legs 11a and 11b. The gate 11 has a passing opening 16 through which a moving member 17 such as a toy of car passes.

The detecting device 12 comprises first and second detectors 12A and 12B which are contained in the gate 11. The first and second detectors 12A and 12B are positioned with a predetermined distance between the first and second detectors 12A and 12B in a direction of movement of the moving member 17. The first and second detectors 12A and 12B are spaced by a predetermined distance of L m. The first and second detectors 12A and 12B produce first and second detecting signals when the first and second detectors 12A and 12B detect the moving member 17, respectively. The first detector 12A comprises a first light emitting element 121 and a first light receiving element 122. The first light emitting element 121 emits a first emitting light.

The first light receiving element 122 receives the first emitting light. As shown in FIG. 4, a filter 18 such as a red filter covers a front surface of the first light emitting element 121. Also, a filter 19 covers a front surface of the first receiving element 122. The filters 18 and 19 passs a particular wavelength of the light. The second detector 12B comprises a second light emitting element 123 and a second light receiving element 124. The second light emitting element 123 emits a second emitting light. The second light receiving element 124 receives the second emitting light. A filter (not shown) such as a red filter covers a front surface of the second light emitting element 123. Also, a filter (not shown) covers a front surface of the second receiving element 124.

The LCD 14 is provided on an upper surface of the gate 11. As shown in FIG.3, the LCD 14 comprises a PM segment 14a, seven segment units 14b, break-point segments 14c, a decimal point segment 14d, a second segment 14e, and a speed per hour segment 14f. The PM segment 14a represents "afternoon". Two of the seven segment units 14b represent "upper two digits". Other two of the seven segment units 14b represent "lower two digits". The break-point segments 14c represent "a break-point of hour and minute". The decimal point segment 14d represents "a decimal point". The second segment 14e represents "second". The speed per hour segment 14f represents "a speed per hour".

As shown in FIG. 4, the coupler portion 11c has a chamber in which the computing unit 13 and an LCD driver 20 are positioned.

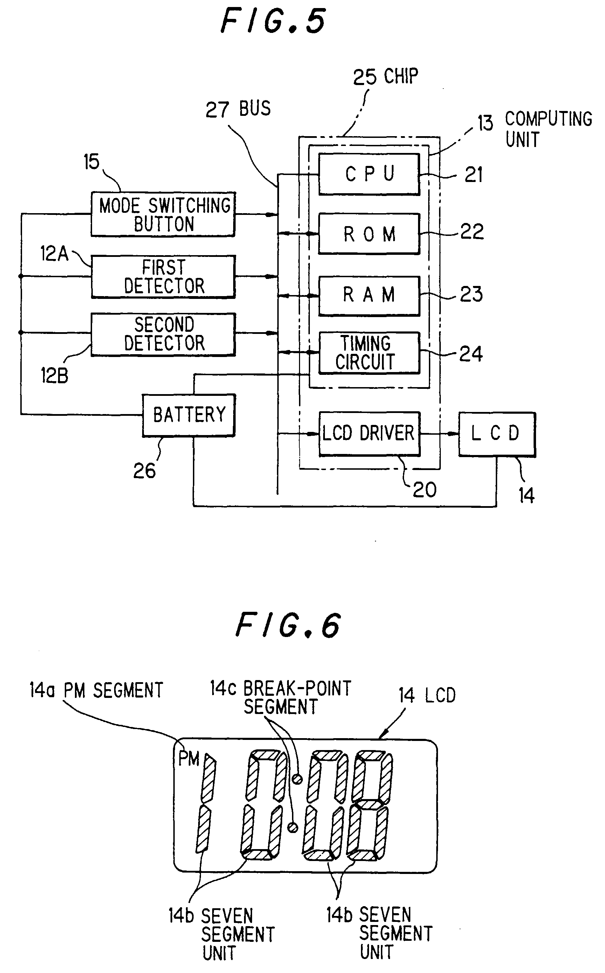

As shown in FIG. 5, the computing unit 13 comprises a CPU 21, a ROM 22, a RAM 23, and a timing circuit24. The computing unit 13 and the LCD driver 20 are integrated on a chip 25 and are connected to a battery 26 which is provided in the coupler portion 11c.

The computing unit 13 is connected to the mode switching button 15 and the first and second detectors 12A and 12B through a bus 27. The mode switching button 15 and the first and second detectors 12A and 12B are connected to the battery 26. The LCD driver 20 is connected to the LCD 14.

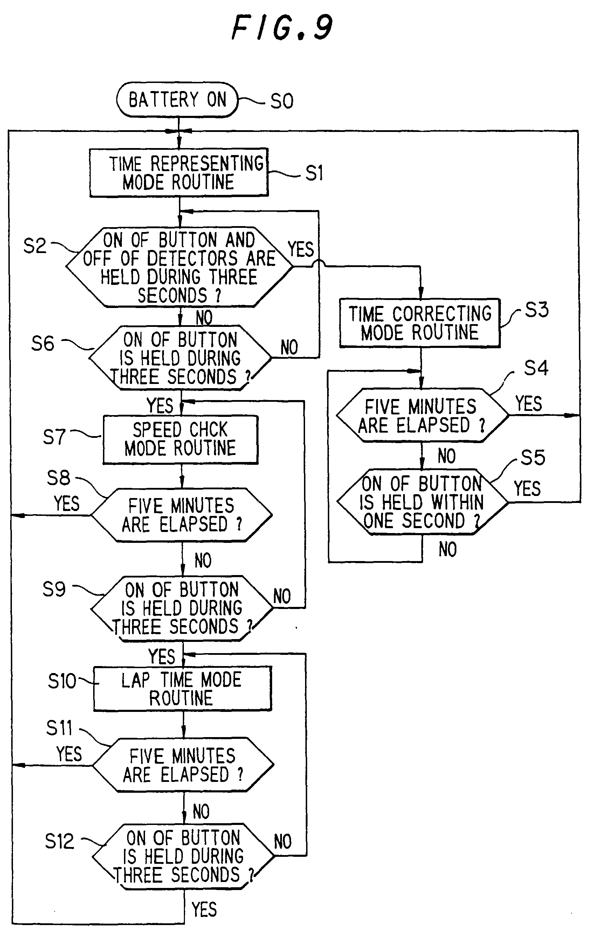

The CPU 21 operates in response to a program which is shown in FIGS. 9 to 11. The ROM 22 holds the program. The RAM 23 holds data. Also, the RAM holds the distance of L m. The first and second detectors 12A and 12B produce first and second detecting signals when the first and second emitting lights are interrupted to supply the first and second detecting signals to the CPU 21, respectively. The timing circuit 24 has a first function which outputs a present time, a second function which times an elapsed time from input of a set signal, and a third function which corrects a present time.

The speed measuring toy 10 is selectively operable in several modes such as a time representing mode, a time correcting mode, a speed check mode, and a lap time mode. The modes of the speed measuring toy 10 are switched by operation of the mode switching button 15 and by the interruption of the first and second emitting lights of the first and second detectors 12A and 12B.

Referring to FIGS. 6 to 11, the description will proceed to operation of the speed measuring toy 10.

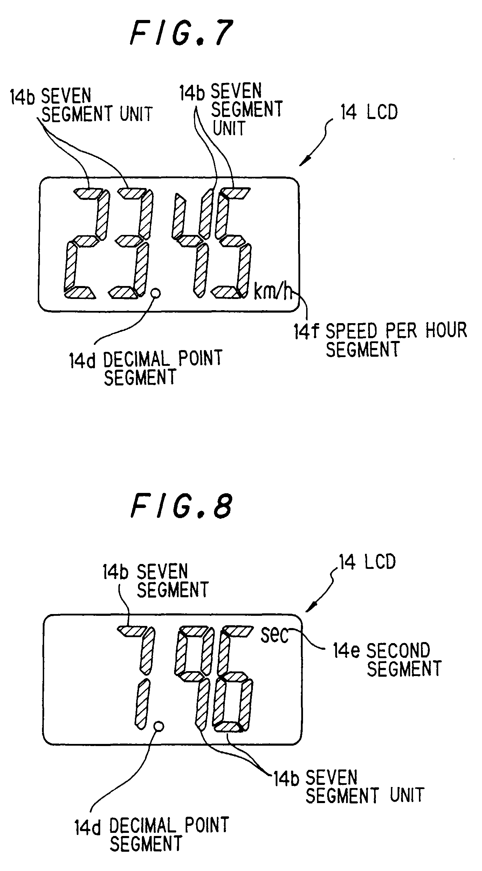

FIG. 6 shows the time representing mode, and FIG. 7 shows the speed check mode, and FIG. 8 shows the lap time mode, respectively, in the LCD 14.

### (1) SWITCHING OF MODES

In FIG. 9, when the battery 26 is ON at a step S0, the time representing mode routine is set at a step S1. The step S1 proceeds to a step S2 at which the CPU 21 judges whether or not the mode switching button 15 is pressed for three seconds, and any one light of the first and second detectors 12A and 12B is interrupted for three seconds. When YES is met at the step S2, a step S3 follows. Otherwise, the step S2 is followed by a step S6.

At the step S3, the time correcting mode routine is set. The step S3 proceeds to a step S4 at which the CPU 21 judges whether or not five minutes elapse. When the five minutes elapse, the step S4 returns to the step S1. Otherwise, the step S4 is followed by a step S5 at which the CPU 21 judges whether or not the mode switching button 15 is pressed for a short period less than or equal to one second. When the mode switching button 15 is pressed for the short period, the step S5 returns to the step S1. Otherwise, the step S5 returns to the step S4.

At the step S6, the CPU 21 judges whether or not the mode switching button 15 is pressed for three seconds. When YES is met at the step S6, the step S6 proceeds to a step S7 at which the speed check mode routine is set. Otherwise, the step S6 returns to the step S2. The step S7 proceeds to a step S8 at which the CPU 21 judges whether or not five minutes elapse. When the five minutes elapse, the step S8 returns to the step S1. Otherwise, the step S8 proceeds to a step S9 at which the CPU 21 judges whether or not the mode switching button 15 is pressed for three seconds. When YES is met at the step S9, the step S9 proceeds to a step S10 at which the lap time mode routine is set. Otherwise, the step S9 returns to the step S7. The step S10 proceeds to a step S11 at which the CPU 21 judges whether or not five minutes elapse. When the five minutes elapse, the step S11 returns to the step S1. Otherwise, the step S11 proceeds to a step S12 at which the CPU 21 judges whether or not the mode switching button 15 is pressed for three seconds. When YES is met at the step S12, the step S12 returns to the step S1. Otherwise, the step S12 returns to the step S10.

### (2) TIME REPRESENTING MODE

In the time representing mode, the LCD 14 displays a present time. For example, the LCD 14 displays "10:08" as shown in FIG. 6. The upper two digits of the seven segment units 14b display an hour. The lower two digits of the seven segment units 14b display a minute. When the present time represents afternoon, the PM segment 14a is ON.

### (3) TIME CORRECTING MODE

In the time correcting mode, a numeral of the upper two digits is gained one by one by interrupting the first emitting light of the first detector 12A, while a numeral of the lower two digits is gained one by one by interrupting the second emitting light of the second detector 12B.

### (4) SPEED CHECK MODE

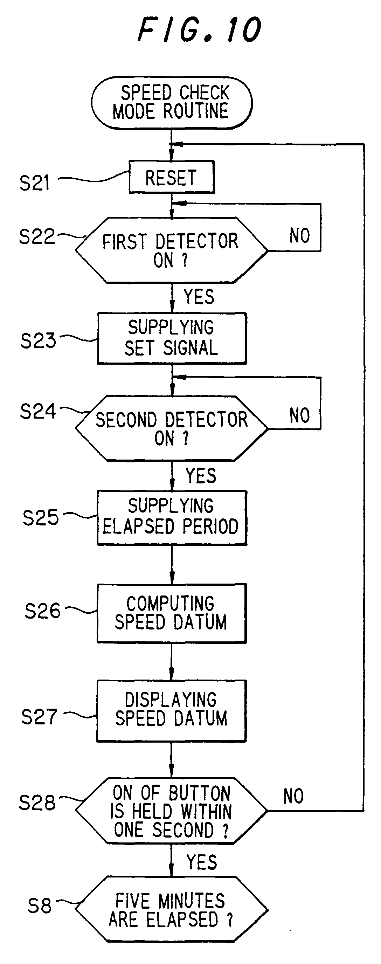

FIG. 10 shows a flow chart in describing operation of the speed check mode routine. In FIG. 10, the CPU 21 resets the computing unit 13 at the step S21. Namely, the CPU 21 sets the LCD 14 to display "00.00". The step S21 proceeds to a step S22 at which the CPU 21 judges whether or not the first detector 12A becomes ON. Namely, the CPU 21 judges whether or not the CPU 21 receives the first detecting signal from the first detector 12A in accordance with the light interruption of the moving member 17 running through the passing opening 16 of the gate 11. When the first detector 12A becomes ON, the step S22 proceeds to a step S23 at which the CPU supplies a set signal to the timing circuit 24. Otherwise, the step S22 is repeated again. When the timing circuit 24 is supplied with the set signal, the timing circuit 24 starts to count a time.

The step S23 proceeds to a step S24 at which the CPU 21 judges whether or not the second detector 12B becomes ON. Namely, the CPU 21 judges whether or not the CPU 21 receives the second detecting signal from the second detector 12B in accordance with the light interruption of the moving member 17 running through the passing opening 16 of the gate 11. When the second detector 12B becomes ON, the step S24 proceeds to a step S25 at which the CPU 21 supplies an elapsed period T counted by the timing circuit 24 to the RAM 23. Otherwise, the step S24 is repeated again. The step S25 proceeds to a step S26 at which the CPU 21 computes a speed datum (km/h) by dividing L by T. The step S26 proceeds to a step S27 at which the CPU 21 controls the LCD driver 20, so that the LCD 14 displays the speed datum. For example, the LCD 14 displays "23.45 km/h" as shown in FIG. 7. The step S27 proceeds to a step S28 at which the CPU 21 judges whether or not the mode switching button 15 is pressed for a short period less than or equal to one second. When the mode switching button 15 is pressed for the short period, the step S28 returns to the step S21. Otherwise, the step S28 proceeds to the step S8 as discussed in Fig. 9.

### (5) LAP TIME MODE

The moving member 17 has been running around a circuit course, on the both sides of which the legs 11a and 11b of the gate 11 are positioned.

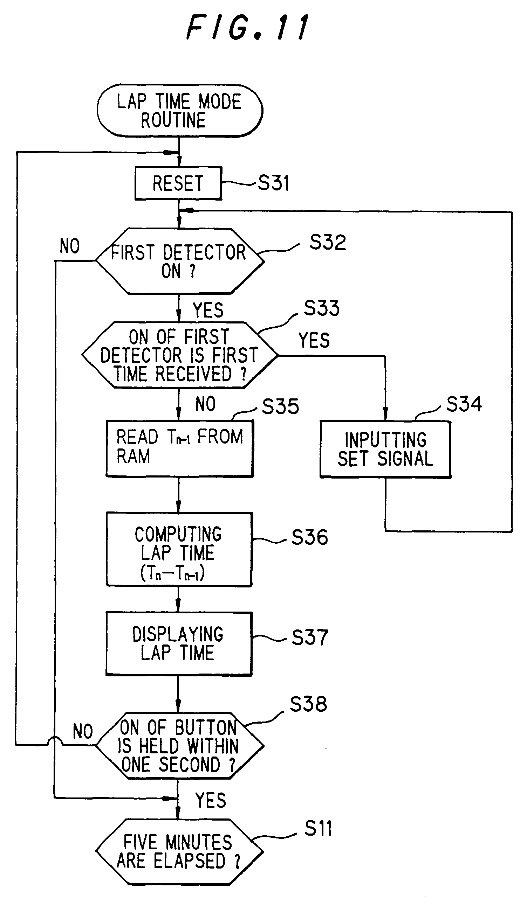

In FIG. 11, the CPU 21 resets the computing unit 13 at the step S31. Namely, the CPU 21 sets the LCD 14 to display "00.00". The step S31 proceeds to a step S32 at which the CPU 21 judges whether or not the first detector 12A becomes ON. Namely, the CPU 21 judges whether or not the CPU 21 receives the first detecting signal from the first detector 12A in accordance with the light interruption of the moving member 17 running through the passing opening 16 of the gate 11. When the first detector 12A becomes ON, the step S32 proceeds to a step S33. Otherwise, the step S32 proceeds to the step S11 as discussed in Fig. 9. When the CPU 21 received the first detecting signal for the first time, the step S33 proceeds to a step S34 at which the CPU 21 supplies a set signal to the timing circuit 24. Otherwise, the step S33 proceeds to a step 35. When the timing circuit 24 is supplied with the set signal, the timing circuit 24 detects the present time Tn-1 to be stored in the RAM 22. The step S34 returns to the step 32 at which the second light interruption is detected in the same manner as in the first one. Thus, the present time Tn is detected for the second light interruption at the step 35, and the former present time Tn-1 is read from the RAM 22. The step 35 proceeds to a step 36 at which the CPU 21 computes a lap time by subtracting Tn-1 from Tn. The step S36 proceeds to a step S37 at which the CPU 21 controls the LCD driver 20, so that the LCD 14 displays the lap time (Tn-Tn-1). For example, the LCD 14 displays "7.96 sec" as shown in FIG. 8. The step S37 proceeds to a step S38 at which the CPU 21 judges whether or not the mode switching button 15 is pressed for a short period less than or equal to one second. When the mode switching button 15 is pressed for the short period, the step S38 returns to the step S11 as discussed in Fig. 9. Otherwise, the step S38 returns to the step S31.

While the invention has thus far been described in conjunction with a single embodiment thereof, it will readily be possible for those skilled in the art to put the invention into practice in various other manners. For example, when the speed datum in the speed check mode is a value outside a measuring speed range (for example, 0.01 to 50.00 km/h) capable of measuring, an error is represented. Also, when the lap time in the lap time mode is a value outside a measuring lap time range (for example, 0.01 to 99.99 sec), an error is represented. The first and second detectors 12A and 12B may be of a photo sensor of reflection type. The detecting device 12 may be of an other device such as a magnetic device.

## Claims

1. A speed measuring toy, comprising:
a gate comprising a couple of legs and a coupler portion which couples said legs, said gate having a passing opening through which a moving member passes;
detecting means attached to said gate for detecting said moving member to produce a detecting signal;
computing means attached to said gate and connected to said detecting means for computing a speed datum in response to said detecting signal from said detecting means; and
displaying means attached to said gate and connected to said computing means for displaying said speed datum from said computing means.

2. A speed measuring toy as defined in claim 1, wherein said detecting means comprises first and second detectors which are positioned with a predetermined distance between said first and second detectors in a direction of movement of said moving member;
said first and second detectors being for producing first and second detecting signals when said first and second detectors detect said moving member, respectively;
said computing means is connected to said first and second detectors for computing a speed of said moving member as said speed datum in response to said first and second detecting signals from said first and second detectors.

3. A speed measuring toy as defined in claim 1, wherein said speed measuring toy measures said speed datum of said moving member which moves on a circuit course;
detecting means being for detecting, at least two times, said moving member to produce detecting signals;
said computing means for computing a lap time as said speed datum in response to said detecting signals from said detecting means.

4. A speed measuring toy as defined in claim 1, wherein said detecting means comprises first and second detectors which are positioned with a predetermined distance between said first and second detectors in a direction of movement of said moving member, said speed measuring toy being selectively operable in a speed check mode and a lap time mode, said speed measuring toy further comprising mode selecting means which selects one of said speed check and lap time modes;
said first and second detectors being for producing first and second detecting signals when said first and second detectors detect said moving member in said speed check mode, one of said first and second detectors being for producing said detecting signals when said one of said first and second detectors detects said moving member in said lap time mode;
said computing means connected to said first and second detectors for computing a speed of said moving member as said speed datum in response to said first and second detecting signals from said first and second detectors in said speed check mode, said computing means being for computing a lap time as said speed datum in response to said detecting signals from said one of said first and second detectors in said lap time mode.
